# FASCICULE DE BREVET EUROPEEN

(11) **EP 2 994 818 B1**
(45) Date de publication et mention de la délivrance du brevet: **18.12.2019**
(21) Numéro de dépôt: 14722180.8
(22) Date de dépôt: 05.05.2014
(51) Int. Cl.: G06F 3/0354, G06F 3/046, G06F 3/01

(54) **INTERFACE HOMME-MACHINE CONFIGURABLE**
KONFIGURIERBARE MENSCH-MASCHINE-SCHNITTSTELLE
CONFIGURABLE HUMAN-MACHINE INTERFACE

(30) Priorité: 07.05.2013 FR 1354160
(43) Date de publication de la demande: 16.03.2016
(73) Titulaire: Commissariat à l'Energie Atomique et aux Energies Alternatives, 75015 Paris (FR)
(72) Inventeur: HAUTSON, Tristan, F-38600 Fontaine (FR); ALOUI, Rabeb, F-38600 Fontaine (FR); JOBERT, Timothée, F-38000 Grenoble (FR)
(74) Mandataire: Colombo, Michel
(86) Numéro de dépôt international: PCT/EP2014/059139
(87) Numéro de publication internationale: WO 2014/180796

(56) Documents cités:
- WO-A1-99/66997
- US-A1- 2003 095 115
- US-A1- 2013 009 907

## Description

L'invention concerne une interface homme-machine configurable pour commander un appareil électrique. Elle concerne également un procédé de commande d'un appareil électrique avec une telle interface homme-machine configurable, ainsi qu'un support d'enregistrement d'informations pour la mise en œuvre de ce procédé.

Des interfaces homme-machine sont utilisées dans de très nombreux domaines techniques différents pour commander un appareil électrique. Par exemple, l'appareil électrique peut être un robot, un écran d'ordinateur, une console de jeux ou tout type d'appareils électriques ou électroniques qui doit être commandé par un être humain.

De manière à pouvoir s'adapter à différents appareils électriques, ou à différentes situations, il est souhaitable que l'interface homme-machine soit configurable. Des interfaces homme-machine configurables comportent :
- au moins un ustensile mobile, chaque ustensile étant actionnable, directement par la main d'un utilisateur, pour passer entre au moins un premier état de commande de l'appareil électrique et un second état,
- une unité de traitement apte :
   - à sélectionner automatiquement une loi de commande à associer à l'ustensile actionné par l'utilisateur, parmi plusieurs lois de commande différentes de l'appareil électrique, chaque loi de commande associant au premier état d'un ustensile, une première commande de l'appareil électrique et au second état de ce même ustensile, une seconde commande différente ou aucune commande de l'appareil électrique, et
   - à générer et à transmettre à l'appareil électrique une commande fonction de l'état dans lequel se trouve l'ustensile et de la loi de commande qui a été sélectionnée pour cet ustensile.

La loi de commande associée à un ustensile détermine le fonctionnement de cet ustensile dans une configuration donnée de l'interface. Dès lors, dans ces interfaces homme-machine, puisque la loi de commande associée à un ustensile est automatiquement sélectionnée, il est simple pour l'utilisateur de modifier la configuration de cette interface machine :
- en remplaçant un ustensile par un autre, ou
- en ajoutant un ustensile supplémentaire, ou
- en enlevant un ustensile, ou
- en déplaçant un ustensile pour, par exemple, s'adapter à un utilisateur gaucher ou droitier.

Toutefois, la réalisation de telle interface homme-machine configurable est complexe. Par exemple, il a été proposé d'équiper chaque ustensile d'un émetteur qui envoie à l'unité de traitement un identifiant de la loi de commande à utiliser avec cet ustensile. Toutefois, il est nécessaire d'alimenter cet émetteur ce qui complexifie la réalisation de l'interface homme-machine configurable.

De l'état de la technique est également connu de : US2013/009907A1, US2003/095115A1 et WO99/66997A1. US2013/009907A1 divulgue notamment une interface homme-machine comportant un stylet ayant au moins un aimant permanent, un réseau d'au moins deux magnétomètres et une unité de traitement apte à déterminer, pour chaque aimant permanent, la valeur d'au moins une variable codant sa position ou son orientation dans un repère tridimensionnel fixé sans aucun degré de liberté au réseau ou l'amplitude de son moment magnétique, à partir des mesures des magnétomètres du réseau et à générer et à transmettre à l'appareil électrique une commande fonction de l'état dans lequel se trouve l'ustensile et d'une loi de commande qui a été sélectionnée pour cet ustensile.

L'invention vise à remédier à cet inconvénient en proposant une interface homme-machine configurable plus simple à réaliser. Elle a donc pour objet une telle interface homme-machine conforme à la revendication 1.

Dans l'interface homme-machine ci-dessus, l'unité de traitement est capable de sélectionner la loi de commande à associer à un ustensile à partir des caractéristiques d'un aimant permanent dont l'ustensile est équipé. Ainsi, dans cette interface, il n'est pas nécessaire d'alimenter un émetteur ou un autre dispositif similaire ce qui simplifie la réalisation de l'interface homme-machine.

Les modes de réalisation de cette interface homme-machine peuvent comporter une ou plusieurs des caractéristiques des revendications dépendantes.

Ces modes de réalisation de l'interface homme-machine présentent en outre les avantages suivants :
- utiliser le même réseau de magnétomètres pour réaliser les mesures qui permettent à la fois de sélectionner la loi de commande et d'établir dans quel état se trouve l'ustensile, simplifie encore plus la réalisation de l'interface homme-machine configurable ;
- équiper l'ustensile d'un aimant permanent dont la direction du moment magnétique est parallèle à l'axe de l'ustensile, permet d'utiliser cet ustensile comme un joystick ou un bouton en croix.

L'invention a également pour objet un procédé de commande d'un appareil électrique conforme à la revendication 5.

Les modes de réalisation de ce procédé de commande peuvent comporter une ou plusieurs des caractéristiques des revendications dépendantes de procédé.

Ces modes de réalisation du procédé de commande présentent en outre les avantages suivants :
- utiliser une partie des variables pour sélectionner la loi de commande et une autre partie pour établir dans quel état se trouve l'ustensile, simplifie la réalisation de l'interface car le même aimant permanent est alors à la fois utilisé pour sélectionner la loi de commande et pour établir l'état de l'ustensile ;
- utiliser uniquement les variables codant l'orientation de l'aimant permanent de l'ustensile permet de disposer ce même ustensile en de très nombreux emplacements différents par rapport au réseau de magnétomètres sans modifier son fonctionnement ;
- utiliser les valeurs des variables codant la position d'un aimant permanent de l'ustensile pour sélectionner la loi de commande à associer à cet ustensile permet de modifier le fonctionnement de cet ustensile en le déplaçant par rapport au réseau de magnétomètres ;
- utiliser la position relative d'un aimant permanent de l'ustensile par rapport à un autre aimant permanent indépendant de cet ustensile permet de modifier le fonctionnement de cet ustensile en modifiant simplement sa position relative par rapport à cet autre aimant permanent distinct ;
- utiliser l'amplitude du moment magnétique d'un aimant permanent dont est équipé l'ustensile pour sélectionner la loi de commande, permet de reconfigurer simplement l'interface homme-machine en remplaçant cet ustensile par un autre ustensile équipé d'un aimant permanent dont l'amplitude du moment magnétique est différente ;
- sélectionner la loi de commande à associer à un ustensile à partir de la position relative de différents aimants permanents dont est équipé cet ustensile permet simplement de modifier la configuration de l'interface homme-machine en remplaçant cet ustensile par un autre ustensile équipé d'aimants permanents dont la position relative les uns par rapport aux autres est différente.

L'invention a également pour objet un support d'enregistrement d'informations comportant des instructions pour l'exécution du procédé ci-dessus lorsque ces instructions sont exécutées par un calculateur électronique.

L'invention sera mieux comprise à la lecture de la description qui va suivre, donnée uniquement à titre d'exemple non limitatif et faite en se référant aux dessins, sur lesquels :
- la figure 1 est une illustration schématique d'une interface homme-machine permettant de commander un appareil électrique,
- la figure 2 est une illustration partielle en vue de dessus d'un réseau de magnétomètres mis en œuvre dans l'interface homme-machine de la figure 1 ;
- la figure 3 est une illustration schématique, en coupe verticale, d'un bouton en croix utilisable dans l'interface de la figure 1 ;
- la figure 4 est une illustration schématique, en vue de dessus, du bouton en croix de la figure 3 ;
- la figure 5 est une illustration schématique, en perspective, d'un volant utilisable dans l'interface de la figure 1 ;
- la figure 6 est une illustration schématique, en coupe verticale, d'un curseur utilisable dans l'interface de la figure 1 ;
- la figure 7 est une illustration schématique, en coupe verticale, d'un bouton utilisable dans l'interface de la figure 1 ;
- la figure 8 est une illustration schématique d'une base de données utilisée dans l'interface de la figure 1 ;
- la figure 9 est un organigramme d'un procédé de commande d'un appareil électrique à l'aide de l'interface homme-machine de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

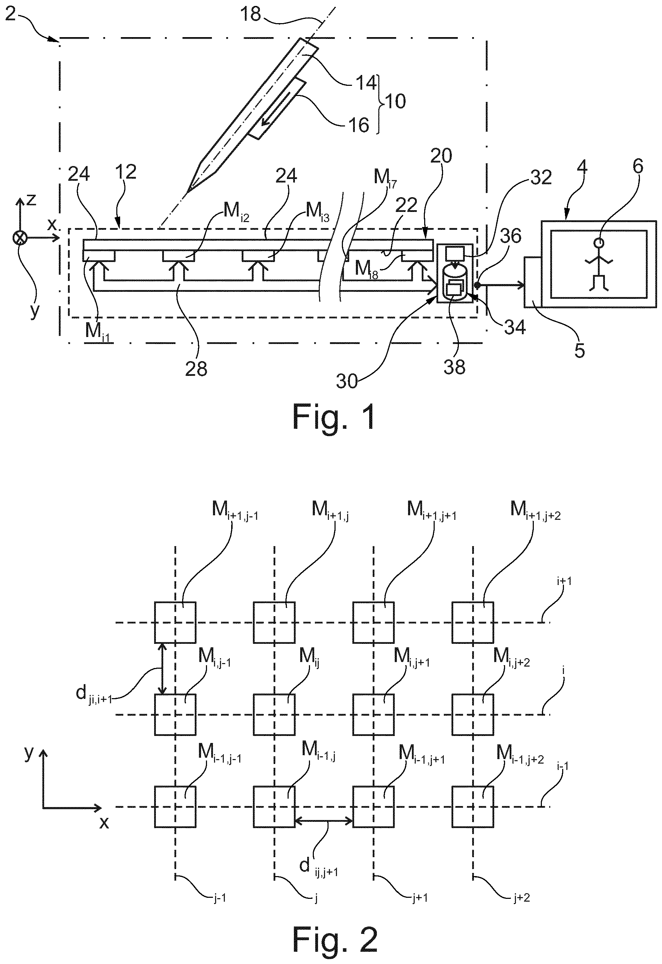

La figure 1 représente une interface homme-machine 2 permettant de commander un appareil électrique 4. Ici, l'appareil électrique comporte un écran et une unité 5 de commande capable de commander l'affichage d'une image sur cet écran.

Ici, le fonctionnement de l'interface 2 est illustré dans le cas où l'unité 5 est une console de jeux vidéo. Par exemple, l'unité 5 commande le déplacement d'un personnage 6 sur l'écran. Toutefois, l'interface 2 est utilisable dans de nombreuses autres applications comme cela est décrit à la fin de cette description.

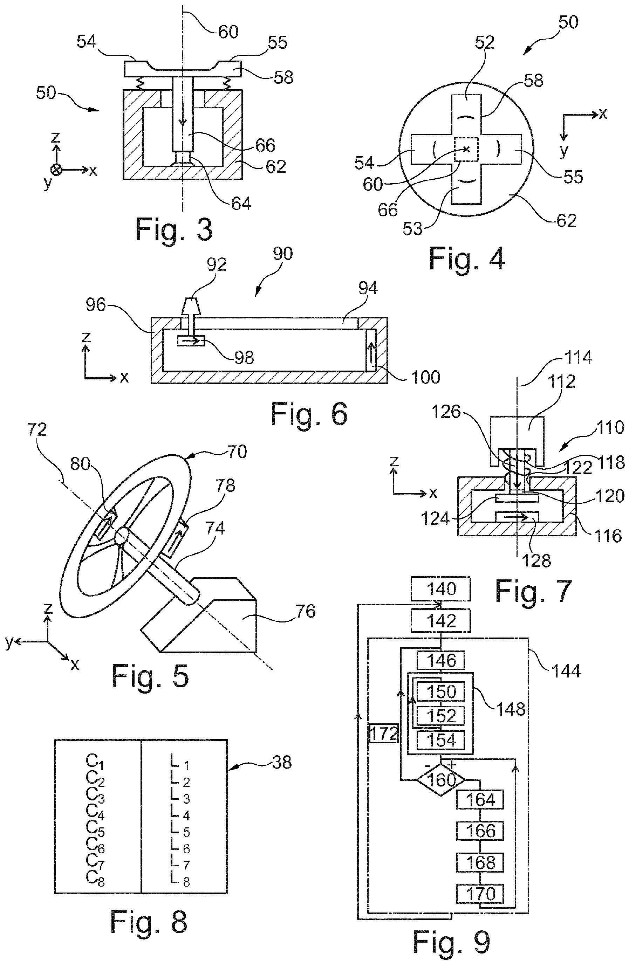

L'interface 2 comporte plusieurs ustensiles actionnables directement à la main par un être humain, dénommé « utilisateur » par la suite. Chacun de ces ustensiles comporte au moins un aimant permanent. Pour simplifier la figure 1, seul un ustensile 10 est représenté sur cette figure. D'autres ustensiles de l'interface 2 sont décrits en référence aux figures 3 à 7. L'interface 2 comporte également un dispositif 12 de localisation de chaque ustensile.

Dans ce mode de réalisation, pour modifier la configuration de l'interface 2, chaque ustensile est librement déplaçable, directement par la main de l'utilisateur, dans un repère orthogonal XYZ fixé sans aucun degré de liberté au dispositif 12. Ici, les directions X et Y sont horizontales et la direction Z est verticale. A cet effet, chaque ustensile pèse moins d'un kilo et, de préférence, moins de 200g. Les dimensions de chaque ustensile sont suffisamment réduites pour qu'il puisse être saisi et déplacé par une seule main de l'utilisateur.

Dans ce mode de réalisation, l'ustensile 10 comprend une manette 14 et un aimant permanent 16 présentant un moment magnétique non nul même en absence de champ magnétique extérieur. La manette 14 a une forme oblongue pour former une poignée facilement saisissable par l'utilisateur. Elle s'étend le long d'un axe longitudinal 18. La manette 14 peut être inclinée librement par l'utilisateur autour de l'un quelconque des axes X, Y et Z du repère XYZ. Ici la manette 14 est destinée à être utilisée comme un joystick. Par exemple, la manette 14 est entièrement réalisée dans un matériau non-magnétique, c'est-à-dire un matériau ne présentant pas de propriété magnétique mesurable par le dispositif 12. Ce matériau est par exemple du plastique.

L'ustensile 10 est localisé à partir de la position de l'aimant 16. Ici, aucune limitation n'est apportée aux degrés de liberté de l'ustensile 10. En particulier, il n'est pas lié mécaniquement au dispositif 12 et peut être utilisé sans contact mécanique avec le dispositif 12.

Typiquement, le champ magnétique coercitif de l'aimant 16 est supérieur à 100 A.m⁻¹ ou 500 Am⁻¹. Par exemple, il est réalisé en matériau ferro- ou ferrimagnétique.

L'aimant 16 est fixé sans aucun degré de liberté sur la manette 14. La direction du moment magnétique de l'aimant 16 est parallèle à l'axe longitudinal 18 de la manette 14. Sur la figure 1 et les suivantes, la direction du moment magnétique d'un aimant est représentée par une flèche. La plus grande longueur de cet aimant est notée L par la suite. La puissance de l'aimant permanent est typiquement supérieure à 0,01 A.m² ou 0,1 A.m².

Le dispositif 12 permet de localiser l'aimant 16 dans le repère XYZ. Par localisation, on entend ici la détermination de la position et de l'orientation de l'aimant 16 dans le repère XYZ. La position est définie sans ambiguïté par les valeurs de trois variables, par exemple les coordonnées x, y et z de l'aimant 16 dans le repère XYZ. Plus précisément, les variables x, y et z sont les coordonnées du centre géométrique de l'aimant 16. Le centre de géométrie d'un objet est le barycentre de l'ensemble des points de cet objet en affectant le même poids à chacun de ces points. L'orientation du moment magnétique de l'aimant 16 est définie sans ambiguïté par les valeurs de deux variables θ_{y} et θ_{z.} Ici, les variables θ_{y} et θ_{z} sont les angles du moment magnétique de l'aimant 16, respectivement, par rapport aux axes Y et Z du repère. Le dispositif 12 détermine également un sixième variable A. La variable A est l'amplitude du moment magnétique de l'aimant 16.

Le dispositif 12 comporte à cet effet un réseau de N magnétomètres tri-axes Mᵢⱼ. Sur la figure 1, les traits ondulés verticaux indiquent qu'une partie du dispositif 12 n'a pas été représentée.

Typiquement, N est supérieur à cinq et, de préférence, supérieur à seize ou trente-deux. Ici, N est supérieur ou égal à soixante-quatre.

Dans ce mode de réalisation, les magnétomètres Mᵢⱼ sont alignés en lignes et en colonnes pour former une matrice. Ici, cette matrice comporte huit lignes et huit colonnes. Les indices i et j identifient, respectivement, la ligne et la colonne de cette matrice à l'intersection de laquelle se trouve le magnétomètre Mᵢⱼ. Sur la figure 1, seuls les magnétomètres Mᵢ₁, Mᵢ₂, Mᵢ₃, Mᵢ₄ et Mᵢ₈ d'une ligne i sont visibles. La position des magnétomètres Mᵢⱼ les uns par rapport aux autres est décrite plus en détail en référence à la figure 2.

Chaque magnétomètre Mᵢⱼ est fixé sans aucun degré de liberté aux autres magnétomètres. A cet effet, les magnétomètres Mᵢⱼ sont fixés sans aucun degré de liberté sur une face arrière 22 d'une plaque rigide 20. Cette plaque rigide présente une face avant 24 tournée vers l'aimant 16. La plaque 20 est réalisée dan un matériau non magnétique rigide. Par exemple, la plaque 20 est en verre.

Chaque magnétomètre Mᵢⱼ mesure la direction et l'intensité du champ magnétique généré par l'aimant 16. Pour cela, chaque magnétomètre Mᵢⱼ mesure la norme de la projection orthogonale du champ magnétique généré par l'aimant 16 au niveau de ce magnétomètre Mᵢⱼ sur trois axes de mesure de ce magnétomètre. Ici, ces trois axes de mesure sont orthogonaux entre eux. Par exemple, les axes de mesure de chacun des magnétomètres Mᵢⱼ sont, respectivement, parallèles aux axes X, Y et Z du repère. La sensibilité du magnétomètre Mᵢⱼ est par exemple de 4^{∗}10⁻⁷T.

Chaque magnétomètre Mᵢⱼ est raccordé par l'intermédiaire d'un bus 28 de transmission d'informations à une unité de traitement 30.

L'unité de traitement 30 est capable de déterminer la localisation de l'aimant 16 dans le repère XYZ et l'amplitude de son moment magnétique à partir des mesures des magnétomètres Mᵢⱼ. A cet effet, l'unité 30 comporte un calculateur électronique 32 programmable apte à exécuter des instructions enregistrées sur un support d'enregistrement d'informations. L'unité 30 comporte donc aussi une mémoire 34 contenant les instructions nécessaires pour l'exécution par le calculateur 32 du procédé de la figure 9. En particulier, pour chaque nombre P d'objets magnétiques susceptibles d'être simultanément utilisés dans l'interface 2, l'unité 30 implémente un modèle mathématique M_{P} associant chaque mesure d'un magnétomètre Mᵢⱼ aux positions, orientations et amplitudes des moments magnétiques de P objets magnétiques dans le repère XYZ. Chaque modèle M_{P} se présente sous la forme d'un système d'équations dans lequel un premier jeu de variables représente les positions et orientations des P objets magnétiques ainsi que les amplitudes des moments magnétiques de ces objets. Un second jeu de variables représente les mesures des magnétomètres Mᵢⱼ. Pour obtenir, les positions, orientations et amplitudes des moments magnétiques des P objets magnétiques, les variables du premier jeu sont les inconnues et les valeurs des variables du second jeu sont connues. Ce modèle est typiquement construit à partir des équations physiques de l'électromagnétisme. Ce modèle est paramétré par les distances connues entres les magnétomètres Mᵢⱼ. Ici, les objets magnétiques sont les aimants permanents. Pour construire ce modèle, chaque aimant permanent est approximé par un dipôle magnétique. Cette approximation n'introduit que très peu d'erreurs si la distance entre l'aimant permanent et le magnétomètre Mᵢⱼ est supérieure à 2L et, de préférence, supérieure à 3L, où L est la plus grande dimension de l'aimant permanent. Typiquement, L est inférieur à 20 cm et, de préférence, inférieur à 10 ou 5cm.

Ici, le modèle M_{P} est non linéaire. L'unité 30 le résout en mettant en œuvre un algorithme d'estimation de sa solution. Par exemple, l'algorithme utilisé est un filtre de Kalman d'ensemble plus connu sous le terme anglais de « Unscented Kalman Filter ».

Étant donné que chaque dipôle magnétique est caractérisé par trois variables pour connaître sa position, deux variables pour connaître son orientation et une variable pour connaître l'amplitude de son moment magnétique, le nombre maximum de dipôles magnétiques simultanément localisables par le réseau de N magnétomètres est inférieur à N/2. Dès lors, la valeur du nombre P est inférieure ou égale à N/2 et, de préférence, inférieure à N/5 ou N/10 ou N/20 pour avoir des mesures redondantes. La redondance des mesures permet d'améliorer la précision de la localisation des dipôles.

Dans ce mode de réalisation, seul cinq modèles mathématiques M₁, M₂, M₃, M₄ et M₅ sont implémentés dans l'unité 30 pour, respectivement, 1, 2, 3, 4 et 5 aimants permanents simultanément présents.

L'unité 30 est également capable de transmettre une commande à l'appareil 4 par l'intermédiaire d'une interface 36 reliée à cet appareil 4.

La mémoire 34 comporté aussi une base 38 de données dans laquelle sont enregistrées plusieurs lois de commande de l'appareil 4. Chaque loi de commande permet de générer la commande de l'appareil 4 correspondant à l'état actuel de l'ustensile auquel elle est associée. A cet effet, chaque loi de commande associe :
- à au moins un état possible de l'ustensile, une commande de l'appareil 4, et
- à un autre état possible du même ustensile, une autre commande de l'appareil 4 ou une absence de commande de l'appareil 4.

La loi de commande détermine donc comment fonctionne l'appareil 4 en réponse à l'actionnement, par l'utilisateur, de l'ustensile qui est associé à cette loi de commande. Cette base 38 est décrite plus en détail en référence à la Figure 8.

La figure 2 représente une partie des magnétomètres Mᵢⱼ du dispositif 12. Ces magnétomètres Mᵢⱼ sont alignés en lignes i parallèles à la direction X. Ces magnétomètres sont également alignés en colonnes j parallèles à la direction Y pour former une matrice. Les lignes i et les colonnes j sont disposées dans l'ordre des indices croissants.

Le centre du magnétomètre Mᵢⱼ se trouve à l'intersection de la ligne i et de la colonne j. Le centre du magnétomètre correspond au point où le champ magnétique est mesuré par ce magnétomètre. Ici, les indices i et j appartiennent à l'intervalle [1 ; 8].

Les centres de deux magnétomètres Mᵢⱼ et M_{i,j+1} immédiatement consécutifs le long d'une ligne i sont séparés par une distance connue d_{i,j,j+1}. De façon similaire, le centre de deux magnétomètres Mᵢⱼ et M_{i+1"j} immédiatement consécutifs le long d'une même colonne j sont séparés par une distance connue d_{j,i,i+1}.

Dans le cas particulier décrit ici, quelle que soit la ligne i, la distance d_{i,j,j+1} est la même. Cette distance est donc notée dⱼ. De façon similaire, quelle que soit la colonne j, la distance d_{j,i,i+1} entre deux magnétomètres est la même. Cette distance est donc notée dᵢ.

Ici, les distances dᵢ et dⱼ sont toutes les deux égales à d.

Typiquement, la distance d est inférieure, et de préférence deux fois inférieur, à la plus petite distance qui peut exister entre deux objets magnétiques simultanément présent devant la face 24 lors d'une utilisation normale de l'interface 2. Ici, la distance d est comprise entre 1 et 4 cm lorsque :
- la puissance de l'aimant permanent est de 0,5 A.m²,
- la sensibilité des magnétomètres est de 4^{∗}10⁻⁷T, et
- le nombre de magnétomètres Mᵢⱼ est de soixante-quatre.

Les figures 3 à 7 représentent d'autres ustensiles utilisables à la place de l'ustensile 10 ou simultanément avec l'ustensile 10 dans l'interface 2.

Les figures 3 et 4 représentent un bouton 50 en croix. Typiquement, un tel bouton est destiné à indiquer une direction de déplacement choisie parmi quatre directions de déplacement perpendiculaires. Le bouton 50 comporte à cet effet quatre touches 52 à 57 disposées aux extrémités des bras d'une croix 58 en forme de symbole « + ». La croix 58 s'étend essentiellement dans un plan perpendiculaire à un axe 60 passant par le centre géométrique de cette croix. L'axe 60 est solidaire, sans aucun degré de liberté de la croix 58. Ici, la croix 58 ne forme qu'un seul bloc de matière réalisée dans un matériau non-magnétique. La croix 58 est reliée au fond d'un boiter 62 par une liaison 64 permettant d'incliner l'axe 60 par rapport à la verticale dans n'importe quelle direction lorsque le fond du boîtier 60 est disposé horizontalement. Cette liaison 64 est par exemple une rotule.

Le bouton 50 est également équipé de moyens de rappel, propre à solliciter en permanence la croix 58 vers sa position horizontale. Par exemple, ces moyens de rappel comportent des ressorts identiques interposés entre chaque touche 52 à 55 et une face avant du boîtier 62.

Le bouton 50 est actionné par l'utilisateur pour passer :
- d'un état de repos dans lequel la croix 58 est dans sa position horizontale,
- vers l'un état enfoncé parmi quatre états enfoncés possibles

Ici, chaque état enfoncé correspond à un état où une seule touche respective 52 à 55 est enfoncée.

Pour déterminer l'état dans lequel se trouve le bouton 50, un aimant permanent 66 est fixé sans aucun degré de liberté à la croix 58. Par exemple, l'aimant 66 est fixé à la croix 58 de manière à ce que la direction de son moment magnétique soit confondue avec l'axe 60. Dans ces conditions, l'état dans lequel se trouve le bouton 50 peut être établi en utilisant uniquement l'inclinaison de l'aimant 66, c'est-à-dire les valeurs des variables θ_{Y} et θ_{Z} déterminées pour cet aimant 66. Ici, les valeurs des variables x, y, z et A de l'aimant 66 ne sont pas utilisées pour établir l'état dans lequel se trouve le bouton 50. Par contre, comme expliqué par la suite, les valeurs de ces quatre variables peuvent être utilisées pour sélectionner la loi de commande associée au bouton 50.

Ici, l'amplitude du moment magnétique de l'aimant 66 est unique, c'est-à-dire différente de l'amplitude de tous les autres aimants permanents susceptibles d'être utilisés dans l'interface 2.

La figure 5 représente un volant 70 monté en rotation autour d'un axe 72. Un tel volant est par exemple destiné à être utilisé pour indiquer un angle α de rotation. Ici, le volant 70 est fixé à l'extrémité d'un arbre 74 qui s'étend le long de l'axe 72. L'autre extrémité opposée de l'arbre 74 est montée libre en rotation dans un pied 76 destiné à reposer sur la face avant 24 du dispositif 12. L'arbre 74 et le pied 76 maintiennent en l'air le volant 70 de manière à faciliter son utilisation.

Le volant 70 peut être tourné à la main par un utilisateur pour prendre une infinité d'états différents. Dans le cas du volant 70, chaque état correspond à une valeur unique de l'angle a. Ici, l'état dans lequel l'angle α est nul est appelé l'état de repos.

Pour mesurer l'angle α du volant 70 autour de l'axe 72, celui-ci est équipé, dans ce mode de réalisation, de deux aimants permanents 78 et 80. Ces aimants sont fixés sans aucun degré de liberté sur le volant 70, par exemple, à des positions diamétralement opposées par rapport à l'axe 72. Ici, ces aimants 78 et 80 sont identiques. La direction du moment magnétique de chacun de ces aimants est tangente à un cercle parallèle au plan dans lequel s'étend essentiellement le volant 70 et dont le centre est situé sur l'axe 72. Ici, dans l'état de repos, les aimants 78 et 80 sont symétriques l'un de l'autre par rapport à un plan vertical. Dès lors, tout écart par rapport à cet état de repos correspond à un angle α non nul.

Ici, l'angle α est uniquement déterminé à partir de l'orientation des aimants 70 et 80. La position de ces aimants 78 et 80 et l'amplitude A de ces aimants peut donc être utilisée pour sélectionner la loi de commande à associer à ce volant 70.

L'amplitude du moment magnétique de ces aimants 78 et 80 est unique dans l'interface 2.

La figure 6 représente un curseur 90. Ce curseur permet, par exemple, de régler la valeur d'un paramètre de l'appareil électrique 4. Ce curseur 90 comporte à cet effet un coulisseau 92 monté déplaçable en translation dans une fente rectiligne 94 ménagée dans une face supérieure d'un boîtier 96. L'utilisateur peut faire coulisser à la main le coulisseau 92 pour modifier l'état du curseur 90. Dans le cas du curseur 90, chaque état correspond à une position particulière du coulisseau 92 le long de la fente 94.

Pour mesurer la position du coulisseau 92 le long de fente 94, le curseur 90 est équipé :
- d'un aimant permanent 98 fixé sans aucun degré de liberté au coulisseau 92, et
- d'un aimant permanent 100 fixé sans aucun degré de liberté au boîtier 96.

Dans ces conditions, l'état du curseur 90 peut être établi par la position relative de l'aimant 98 par rapport à l'aimant 100. Ici, l'état du curseur 90 est établi à partir de la valeur de la distance d₉₀ la plus courte entre les centres géométriques des aimants 98 et 100.

Dès lors, la position absolue de l'aimant 100 et son orientation peuvent être utilisées pour sélectionner la loi de commande à associer à ce curseur 90.

Dans ce mode de réalisation, la direction du moment magnétique de l'aimant 100 est parallèle à l'axe Z lorsque la fente 94 s'étend horizontalement. Les amplitudes des moments magnétiques des aimants 98 et 100 sont uniques dans l'interface 2 et différentes l'une de l'autre.

La figure 7 représente un bouton 110. Ce bouton 110 est déplaçable à la main par un utilisateur entre un état de repos (représenté sur la figure 7) et à un état enfoncé. Typiquement, le bouton 110 est destiné à déclencher une action de l'appareil 4 uniquement lorsqu'il atteint son état enfoncé.

Ce bouton 110 comporte une touche 112 uniquement déplaçable en translation, le long d'un axe 114 solidaire d'un boîtier 116, entre une position de repos (représenté sur la figure 7) et une position enfoncée. Dans la figure 7, l'axe 114 est vertical. Les états de repos et enfoncé correspondent, respectivement, aux positions de repos et enfoncée de la touche 112.

Le bouton 110 comporte des moyens de rappel qui sollicitent en permanence de la touche 112 vers sa position de repos. Ces moyens de rappel comportent ici un ressort 118 interposé entre une partie inférieure du bouton 112 et une face supérieure du boîtier 116.

Une tige rectiligne 120 s'étend le long de l'axe 114, cette tige 120 est fixée, d'un côté, sans aucun degré de liberté à la touche 112 et, de l'autre côté, à une butée 124. Cette tige 120 est montée à coulissement à l'intérieur d'un orifice 122 ménagé dans la face supérieure du boîtier 116.

La butée 124 permet de retenir l'extrémité inférieure de cette tige 120 à l'intérieur du boîtier 116.

Pour déterminer l'état dans lequel se trouve le bouton 110, la tige 120 comporte un aimant permanent 126 fixé sans aucun degré de liberté sur cette tige. Dans ce mode de réalisation, la direction du moment magnétique de l'aimant 126 est confondue avec l'axe 114.

Un autre aimant permanent 128 est également fixé sans aucun degré de liberté sur le fond du boîtier 116.

Dès lors, l'état dans lequel se trouve le bouton 110 peut être établi à partir de la position relative de l'aimant 126 par rapport à l'aimant 128. Par exemple, l'état est établi à partir de la valeur d'une distance d₁₁₀ et d'un seuil S₀. La distance d₁₁₀ est la distance la plus courte qui sépare les centres géométriques des aimants 126 et 128. Le seuil S₀ est utilisé pour discriminer l'état enfoncé de l'état de repos. Si la distance d₁₁₀ est inférieure au seuil S₀, cela signifie que le bouton 110 est dans son état enfoncé. A l'inverse, si la distance d₁₁₀ est supérieure à ce seuil S₀, le bouton 110 est dans son état de repos.

La distance d₁₁₀ est indépendante des valeurs des variables x, y, A, θ_{Y}, θ_{Z} des aimants 126 et 128. Par conséquent, la valeur de ces variables peut être utilisée pour sélectionner la loi de commande à associer à ce bouton 110 lorsqu'il est utilisé dans l'interface 2.

Ici, les aimants 126 et 128 sont structurellement identiques.

La figure 8 représente plus en détail la base de données 38. Cette base 38 comporte plusieurs lois de commande Lᵢ préenregistrées. De plus, elle associe à chaque loi Lᵢ préenregistrée, une condition Cᵢ de sélection. Si la condition Cᵢ est vérifiée par un aimant permanent ou une paire d'aimants permanents d'un ustensile, alors, cette loi de commande est associée à l'ustensile équipé de cet aimant ou paire d'aimants. L'indice « i » identifie la loi de commande Lᵢ ainsi que la condition Cᵢ associée à cette loi Lᵢ par la base 38. Chaque condition Ci porte sur les valeurs des variables déterminées pour les aimants permanents qui équipent un ustensile et qui, généralement, ne sont pas utilisées pour établir l'état dans lequel se trouve actuellement cet ustensile.

A titre d'illustration, plusieurs exemples de lois de commande et de conditions associées à ces lois de commande vont maintenant être décrits.

La loi L₁ est une loi de commande qui utilise uniquement les valeurs des variables θ_{Y} et θ_{Z}. Plus précisément, elle transforme chaque valeur des angles θ_{Y} et θ_{Z} en une commande respective de l'appareil 4. Par exemple, cette commande peut provoquer un déplacement du personnage 6 dans une direction spécifiée par les valeurs des angles θ_{Y} et θ_{Z}.

Cette loi L₁ est associée à une condition C₁. La condition C₁ est la suivante : la valeur de la variable A doit être comprise entre S₁ et S₂, où S₁ et S₂ sont des limites prédéfinies telles que seule l'amplitude du moment magnétique de l'aimant 16 soit comprise entre ces limites. Cette loi L₁ est donc destinée à être associée à l'ustensile 10. Si le dispositif 12 détermine que la valeur de la variable A d'un aimant permanent est comprise entre S₁ et S₂, alors il utilise la loi L₁ pour convertir les valeurs des angles θ_{Y} et θ_{Z} de ce même aimant en une commande l'appareil 4. Dès lors, en modifiant l'inclinaison de l'ustensile 10, il est possible de commander l'appareil 4. Ceci reste vrai quelle que soit la position de l'ustensile 10 par rapport au dispositif 12 à partir du moment où la présence de l'aimant 16 peut être détectée. L'emplacement de l'ustensile 10 peut donc librement être choisi par l'utilisateur, ce qui correspond à une infinité de configuration possible pour l'interface 2.

La loi L₂ est une loi de commande identique à la loi L₁ mais qui génère des commandes différentes de l'appareil 4 pour les mêmes valeurs des angles θ_{Y} et θ_{Z}. La loi L₂ est associée à la condition C₂. La condition C₂ est la suivante :
- la valeur de l'amplitude du moment magnétique est comprise entre des limites S₃ et S4, et
- les coordonnées x, y et z de cet aimant permanent sont situées à l'intérieur d'une zone prédéfinie V_{D}.

Les limites S₃ et S₄ sont des limites prédéfinies telles que seule l'amplitude du moment magnétique de l'aimant permanent 66 soit comprise entre ces limites. Cette loi est donc destinée à être associée au bouton en croix 50.

Par exemple, la zone V_{D} est l'espace situé à droite d'un plan médian, où la droite est le côté pointé par la direction X du repère XYZ. Le plan médian est ici un plan parallèle aux axes Y et Z et qui coupe la matrice de magnétomètres Mᵢⱼ en son milieu. Dès lors, la loi L₂ est associée au bouton 60 uniquement si celui-ci est disposé à l'intérieur de la zone V_{D}.

La loi L₃ est identique aux lois L₁ et L₂ mais génère des commandes différentes de l'appareil 4 pour les mêmes valeurs des angles θ_{Y} et θ_{Z}.

La loi L₃ est associée à une condition C₃. La condition C₃ est identique à la condition C₂ sauf que la zone V_{D} est remplacée par une zone V_{G}. La zone V_{G} est le volume situé à gauche du plan médian précédemment défini.

Ainsi, la loi L₃ est associée au bouton 60, uniquement si ce bouton est situé à l'intérieur de la zone V_{G}. Ceci illustre donc un cas où le fonctionnement d'un même ustensile n'est pas le même selon l'emplacement qu'il occupe par rapport au réseau de magnétomètres Mᵢⱼ. De plus, en utilisant de telles conditions de sélection, il est aussi possible d'utiliser simultanément un exemplaire du bouton 60 dans la zone V_{D} et, simultanément, un autre exemplaire du bouton 60 situé à l'intérieur du volume V_{G}. Bien que ces deux boutons soient structurellement identiques, le fonctionnement de ces deux boutons n'est pas le même car les lois de commande que l'unité de traitement associe à chacun de ces boutons ne sont pas les mêmes. Cela illustre une situation où la configuration de l'interface 2 peut être modifiée en déplaçant un ustensile d'une zone prédéfinie vers une autre zone prédéfinie.

La loi L₄ est une loi de commande qui utilise uniquement les valeurs des variables θ_{Y} et θ_{Z} de deux aimants permanents pour commander l'appareil 4 en fonction de la valeur d'un angle α de rotation.

Typiquement, cette loi L₄ est conçue que pour être associée au volant 70. A cet effet, la loi L₄ est associée par la base 38 à une condition C₄. La condition C₄ est ici la suivante : les valeurs des variables A pour deux aimants permanents distincts simultanément présents devant la face 24 sont chacune comprise entre des limites S₅ et S₆, où les limites S₅ et S₆ sont des limites prédéfinies telle que seule l'amplitude du moment magnétique des aimants permanents 78 et 80 soit comprise entre ces limites. Avec cette condition C₄, la même loi de commande L₄ est associée au volant 70 quel que soit l'endroit où il est disposé sur la face 24. L'utilisateur peut donc librement choisir l'emplacement où il dispose le volant 70 dans l'interface 2.

La loi L₅ est une loi de commande qui utilise la valeur d'un distance entre deux aimants permanents pour générer une commande de réglage d'un paramètre de l'appareil 4 en fonction de cette distance. Cette loi L₅ précise que la distance est mesurée entre :
- un aimant permanent dont l'amplitude du moment magnétique est comprise entre des limites S₇₁ et S₈₁ prédéfinies telle que seul l'aimant 98 puisse satisfaire cette condition, et
- un aimant permanent dont l'amplitude du moment magnétique est comprise entre des limites S₇₂ et S₈₂ prédéfinies telle que seul l'aimant 100 puisse satisfaire cette condition.

Cette loi de commande est typiquement conçue pour être associée au curseur 90 de sorte que la distance correspond à la distance d₉₀. A cet effet, la loi L₅ est associée à une condition C₅. Cette condition C₅ est la suivante :
- la valeur de la variable A d'un aimant permanent est comprise entre les limites S₇₂ et S₈₂, et
- la valeur de l'angle θ_{Z} de ce même aimant permanent est égale à zéro à plus ou moins 2 % prés.

Avec une telle condition C₅, la loi L₅ est associée au curseur 90 uniquement si celui-ci est positionné de manière à ce que le coulisseau 92 se déplace parallèlement à la face 24. De plus, ici, au plus un seul exemplaire du curseur 90 doit être disposé horizontalement sur la face 24 à un instant donné.

La loi L₆ est une loi de commande identique à la loi L₅ mais qui génère des commandes différentes de l'appareil 4 pour les mêmes valeurs de la distance d₉₀. A cet effet, la loi L₆ est associée à une condition C₆. La condition C₆ est ici la suivante :
- la valeur de la variable A d'un aimant permanent est comprise entre les limites S₇₂ et S₈₂, et
- la valeur de l'angle θ_{Z} est égale à 90° à plus ou moins 2 % prés.

Avec cette condition C₆, la loi L₆ est associée au curseur 90 uniquement si celui-ci est positionné de manière à ce que le coulisseau 92 se déplace verticalement. Ainsi, les conditions C₅ et C₆ permettent d'obtenir un cas où le fonctionnement du même ustensile est modifié en fonction de son orientation.

La loi L₇ est une loi de commande qui utilise uniquement la distance la plus courte entre deux aimants permanents identiques pour générer une commande de l'appareil 4. Ici, la loi L₇ est destinée à être associée au bouton 110 de sorte que la distance la plus courte correspond à la distance d₁₁₀. Par exemple, la loi de commande L₇ est la suivante :
- si la distance d₁₁₀ est supérieure au seuil S₀, alors l'unité 30 ne génère aucune commande de l'appareil 4, et
- si la distance d₁₁₀ est inférieure ou égale au seuil S₀, alors l'unité 30 génère et transmet une commande à l'appareil 4.

La loi L₇ est associée à une condition C₇. Ici, cette condition C₇ est la suivante :
- les valeurs des variables A de deux d'aimants permanents distincts sont comprises toutes les deux entre des limites S₉ et S₁₀, et
- la distance la plus courte entre ces deux aimants est inférieure à un seuil Dₘₐₓ₁₁₀, et
- les positions de ces deux aimants permanents n'appartiennent pas à une zone V₁.

Les limites S₉ et S₁₀ sont des constantes prédéfinies telles que seule l'amplitude du moment magnétique des aimants 126 et 128 soit comprise entre ces limites. La valeur du seuil Dₘₐₓ₁₁₀ est choisi égale à la plus grande valeur possible de la distance d₁₁₀.

La zone V₁ est ici un volume de dimension prédéfinie dont l'emplacement est défini par la position d'au moins un autre aimant mécaniquement indépendant de ceux de la paire d'aimants permanents de ce bouton 110. Par exemple, la zone V₁ est le demi-espace situé à droite d'un plan parallèle aux axes Y et Z et passant par le centre géométrique de cet autre aimant permanent. Ainsi, le fonctionnement d'un exemplaire du bouton 110 dépend de sa position relative par rapport à cet autre aimant permanent. Ici, on utilise pour l'autre aimant permanent, les aimants 126 et 128 d'un autre exemplaire du bouton 110 simultanément présent devant la face 24. Ainsi, la loi de commande associée à un exemplaire du bouton 110 dépend de sa position par rapport à un autre exemplaire de ce même bouton.

La loi L₈ est identique à la loi L₇ sauf que pour la même distance d₁₁₀, elle génère une commande différente de l'appareil 4. Cette loi L₈ est associée à une condition C₈. La condition C₈ est la suivante :
- les valeurs des variables A de deux d'aimants permanents distincts sont comprises toutes les deux entre des limites S₉ et S₁₀, et
- la distance la plus courte entre ces deux aimants est inférieure à un seuil Dₘₐₓ₁₁₀, et
- la position de ces aimants permanents est située à l'intérieur de la zone V₁.

Dès lors, si un seul exemplaire de bouton 110 est présent devant la face 24 du dispositif 12, ce bouton 110 est automatiquement associé à la loi L₇ puisque l'emplacement de la zone V₁ ne peut pas être défini. Par contre, si deux exemplaires du bouton 110 sont simultanément présents devant la face 24, l'exemplaire du bouton 110 qui est situé à droite de l'autre exemplaire est automatiquement associé à la loi L₈, tandis que la loi L₇ est associée à l'autre exemplaire qui est situé le plus à gauche. Ainsi, les conditions C₇ et C₈ illustrent un cas où le fonctionnement d'un ustensile dans l'interface 2 dépend de sa position relative par rapport à un autre ustensile.

Le fonctionnement de l'interface 2 va maintenant être décrit plus en détail en référence au procédé de la figure 9.

Ce procédé débute par une phase 140 d'initialisation lors de laquelle les différentes lois Lᵢ de commande et les différentes conditions Cᵢ de sélection de ces lois de commande sont enregistrées dans la base de données 38.

Ensuite, on procède à une phase 142 de configuration de l'interface 2. Lors de cette phase 142, l'utilisateur choisit un ou plusieurs ustensiles parmi les ustensiles 10, 60, 70, 90 et 110. Ici, on suppose qu'il ne dispose que d'un seul exemplaire des ustensiles 10 et 70 et de deux exemplaires des ustensiles 60, 90 et 110. Ensuite, il les dispose librement sur la face 24 du dispositif 12. De plus, il s'assure que la configuration réalisée ne conduit pas à avoir simultanément plus de cinq aimants permanents devant la face 24. L'interface homme-machine est alors configurée.

Il est alors possible de procéder à une phase 144 d'utilisation de cette interface.

La phase 144, débute par une étape 146 lors de laquelle les magnétomètres Mᵢⱼ mesurent simultanément le champ magnétique du ou des aimants permanents simultanément présents devant la face 24.

Ensuite, lors d'une étape 148, l'unité 30 détermine à partir des mesures des magnétomètres Mᵢⱼ la position, l'orientation et l'amplitude du moment magnétique de chacun des aimants permanents présents.

Pour cela, lors d'une opération 150, l'unité 30 résout le système d'équations du modèle M₁ à un dipôle magnétique. Elle obtient un jeu de coordonnées x₁, y₁, z₁, θ₁ et ϕ₁ et une amplitude A₁.

Ensuite, lors d'une opération 152, l'unité 30 calcule une erreur E₁ représentative de l'écart entre :
- l'estimation des valeurs mesurées par les magnétomètres, calculées à partir du système d'équations M₁ et à partir des positions, orientations et amplitudes obtenues à l'issue de l'opération 150, et
- les valeurs des mesures des magnétomètres réellement mesurées lors de l'étape 146.

Dans le cas où l'algorithme utilisé pour résoudre le modèle est un filtre de Kalman d'ensemble ou étendu, la résolution de ce système d'équations lors de l'opération 150 fournit également une estimation de cette erreur E₁.

Les étapes 150 et 152 sont réalisées pour P = 1 jusqu'à P = 5. De préférence, les étapes 150 et 152 pour chaque valeur de P sont réalisées en parallèle.

Ensuite, lors d'une opération 154, l'unité 30 sélectionne le résultat obtenu avec le modèle M_{P} qui donne l'erreur E_{P} la plus petite. Ainsi, s'il n'y a qu'un seul aimant permanent devant la face 24, l'unité 30 sélectionne automatiquement le modèle M₁. Si, au contraire, il y a deux aimants permanents, l'unité 30 sélectionne alors automatiquement le modèle M₂ et ainsi de suite.

A l'issue de cette étape 148, le nombre d'aimants permanents et les valeurs des variables x, y, z, θ_{Y}, θ_{Z} et A pour chacun de ces aimants permanents sont connus.

Lors d'une étape 160, l'unité 30 sélectionne automatiquement la loi de commande à associer à un aimant permanent ou à une paire d'aimants permanents en utilisant les valeurs des six variables déterminées lors de l'étape 148 pour chacun de ces aimants. Pour cela, l'unité 30 vérifie d'abord si cet aimant permanent ou cette paire d'aimants permanents satisfait l'une des conditions Cᵢ. Dans l'affirmative, l'unité 30 sélectionne automatiquement la loi Lᵢ de commande associée à la condition Cᵢ qui est satisfaite dans la base de données 38 et procède à une étape 164. Dans le cas contraire, c'est-à-dire si cet aimant permanent ou cette paire d'aimants permanents ne satisfait aucune condition Cᵢ, alors l'unité 30 réitère l'étape 160 pour un autre aimant permanent ou une autre paire d'aimants permanents. Lorsqu'il n'existe plus aucun aimant permanent et plus aucune paire d'aimants permanents à tester, le procédé retourne à l'étape 146.

Par exemple, lors de l'étape 160, s'il existe un aimant permanent dont l'amplitude du moment magnétique est comprise entre les limites S₁ et S₂, l'unité 30 sélectionne automatiquement la loi L₁ comme étant la loi à associer à l'ustensile équipé de cet aimant permanent.

A chaque fois qu'une condition Cᵢ est satisfaite, lors d'une étape 164, l'unité 30 établit l'état de l'ustensile à partir d'une partie des variables x, y, z, θ_{Y}, θ_{Z} et A déterminées lors de l'étape 148 pour cet aimant permanent ou cette paire d'aimants permanents. Par exemple, dans le cas de l'aimant permanent 16, l'unité 30 calcule l'inclinaison de l'ustensile 10 à partir des valeurs des angles θ_{Y} et θ_{Z}.

Une fois l'état de l'ustensile établi, lors d'une étape 166, l'unité 30 génère une commande de l'appareil 4 en utilisant la loi de commande sélectionnée lors de l'étape 160 et l'état établi lors de l'étape 164 pour cet aimant permanent ou cette paire d'aimants permanents. Par exemple, dans le cas de l'ustensile 10, l'unité 30 génère une commande de l'appareil 4 pour que le personnage 6 se déplace dans la direction dans laquelle l'utilisateur a penché l'ustensile 10.

Ensuite, lors d'une étape 168, l'unité 30 transmet la commande ainsi générée à l'appareil 4.

Lors d'une étape 170, l'appareil 4 exécute la commande transmise et réalise, en réponse, une action fonction de la commande transmise.

Les étapes 164 à 170 sont réitérées pour chaque aimant permanent ou paire d'aimants permanents qui satisfait l'une des conditions Cᵢ contenues dans la base de données 38.

En parallèle des étapes 146 à 170, lors d'une étape 172, l'utilisateur actionne librement le ou les ustensiles déposés sur la face 24 pour commander l'appareil 4.

Lorsque l'utilisateur souhaite reconfigurer l'interface 2. Il retourne à la phase 142. Lors de cette nouvelle exécution de la phase 142, il peut modifier la configuration de l'interface 2, par exemple :
- en enlevant ou en ajoutant un ustensile, et/ou
- en déplaçant un ustensile pour changer son fonctionnement.

Ainsi, l'interface 2 est facilement configurable tout en restant simple à fabriquer.

De nombreux autres modes de réalisation sont possibles. Par exemple, la face avant 24 n'est pas nécessairement plane. Par exemple, en variante, il s'agit d'une forme en relief. Typiquement, cette forme en relief peut comporter des logements en creux destinés à recevoir et à immobiliser les ustensiles dans ces logements.

En variante, l'inclinaison d'un ustensile comportant deux aimants permanents est déterminée à partir de la position de chacun de ces aimants permanents et non pas uniquement à partir de la direction du moment magnétique d'un de ces aimants. De plus, si ces deux aimants permanents ont des moments magnétiques différents, il est aussi possible de déterminer une direction à partir des positions de ces aimants permanents.

D'autres ustensiles que ceux précédemment décrits sont réalisables et utilisables dans l'interface 2. Par exemple, la croix 58 peut être remplacée par un disque. Cela permet d'indiquer une direction de déplacement parmi une infinité de directions de déplacement en inclinant le disque dans cette direction. Dans une autre variante, l'arbre 74 et le pied 76 sont omis. L'utilisateur peut alors librement déplacer le volant par rapport à la face 24.

De nombreuses lois de commande différentes peuvent être développées. Par exemple, la commande de l'appareil 4 peut être fonction de la vitesse ou de l'accélération d'un aimant permanent équipant l'un des ustensiles. Dans un autre exemple, la loi de commande associée au bouton 110 est une fonction continue de la distance d₁₁₀. Dans ce cas, à cause de la présence du ressort 118, cette loi de commande est fonction de la pression exercée par l'utilisateur sur la touche 112.

Il est également possible d'associer plusieurs lois de commande au même ustensile lors de son utilisation. Par exemple, en plus de la loi L₁, on peut en même temps associer à l'ustensile 10 une loi de commande L₁₁ qui génère des commandes de l'appareil 4 en fonction d'autres variables que celles utilisées dans la loi L₁. Par exemple, la loi L₁₁ est la suivante : si z est supérieur à un seuil prédéterminé S₁₁ alors une commande spécifique est transmise à l'appareil 4 alors que si z est inférieur à S₁₁ cette commande spécifique n'est pas transmise. La commande spécifique déclenche par exemple un saut du personnage 6 alors qu'il se déplace dans la direction dans laquelle l'utilisateur a penché l'ustensile 10. Les lois de commandes L₁ et L₁₁ peuvent aussi être regroupées au sein d'une seule et même loi de commande associée à la même condition C₁ de sélection.

Pour être capable d'associer différentes lois de commande à un même ustensile ou à différents ustensiles, il n'est pas nécessaire d'enregistrer plusieurs lois de commande dans la base 38. En variante, une seule loi de commande paramétrée est enregistrée dans la mémoire 34 et chaque condition Cᵢ est associée à un jeu respectif de valeurs pour les différents paramètres de cette loi de commande.

De nombreuses autres conditions de sélection peuvent être conçues. Par exemple, la condition de sélection peut tester si l'inclinaison d'un moment magnétique d'un aimant permanent de l'ustensile est comprise dans une plage de valeurs prédéterminée et, uniquement dans l'affirmative, associer une loi Lₖ de commande à l'ustensile équipé de cet aimant permanent. On peut ainsi réaliser un bouton qui est associé à une première loi de commande quand il est à l'endroit et à une autre loi de commande quand il est utilisé à l'envers.

La condition permettant de sélectionner la loi de commande à associer à un ustensile ne teste pas nécessairement la valeur de la variable A. Par exemple, si l'interface comporte uniquement un seul ustensile ou uniquement plusieurs exemplaires identiques de ce même ustensile, il n'est alors pas nécessaire de tester la valeur de l'amplitude du moment magnétique de l'aimant permanent de cet ustensile car celle-ci est la même pour tous les exemplaires. Dans ce cas, la loi de commande est sélectionnée, par exemple, uniquement, en fonction de la position de l'aimant permanent par rapport à une zone prédéfinie.

Il est également possible de définir des conditions vérifiant si la position d'un aimant permanent est non pas située à l'intérieur d'un volume prédéfini mais dans une position particulière par rapport à un point fixe du repère X, Y, Z ou à un point dont la position est définie par un autre aimant permanent distinct de l'ustensile.

Une condition Cᵢ peut également tester si une position relative particulière d'au moins deux aimants permanents équipant le même ustensile est rencontrée. Dans l'affirmative, cela permet d'identifier cet ustensile et donc de sélectionner une loi de commande à associer à cet ustensile. Dans ce cas, il n'est alors pas nécessaire d'utiliser l'amplitude des moments magnétiques pour sélectionner la loi de commande à associer à cet ustensile.

Si le nombre P d'aimants permanents simultanément présents devant la face 24 est connu à l'avance, le procédé de commande peut être simplifié en utilisant seulement le modèle M_{P} correspondant pour déterminer la position, l'orientation et l'amplitude du moment magnétique de ces P aimants permanents. Par exemple, le nombre P d'aimants permanents est saisi par l'utilisateur lors de la phase de configuration. La sélection du modèle présentant l'erreur E_{P} minimale peut donc être omise.

En variante, l'interface homme-machine 2 peut ne comporter qu'un seul ustensile dont le fonctionnement change en fonction de sa position par rapport au réseau de magnétomètres Mᵢⱼ.

Dans un autre variante, les aimants permanents utilisés pour sélectionner automatiquement la loi de commande à associer à un ustensile ne sont pas les mêmes que ceux utilisés pour établir dans quel état se trouve l'ustensile. Il est aussi possible d'établir l'état dans lequel se trouve l'ustensile en utilisant d'autres capteurs que les magnétomètres Mᵢⱼ et sans utiliser pour cela un aimant permanent équipant l'ustensile.

L'unité de traitement et les magnétomètres Mᵢⱼ peuvent être simplifié pour déterminer uniquement la ou les variables nécessaires à la sélection automatique de la loi de commande et à l'établissement de l'état de l'ustensile. Le nombre de valeurs de variables déterminées pour chaque aimant permanent peut donc être inférieur à six. Par exemple, dans un mode de réalisation simplifié où l'amplitude du moment magnétique et l'orientation de chaque aimant permanent sont connues à l'avance, seule la position de chaque aimant permanent est déterminée. Une telle situation peut se rencontrer, par exemple, si l'on utilise uniquement un ou plusieurs exemplaires du bouton 110 disposés sur la face plane 24.

Le changement de configuration de l'interface 2 n'est pas nécessairement réalisé directement à la main par un utilisateur. Dans une autre variante, l'interface comporte des actionneurs électriques permettant de modifier la configuration de l'interface. Par exemple, à cet effet, le déplacement des ustensiles ou le remplacement de ces ustensiles par d'autres ustensiles est motorisé, de sorte que l'utilisateur n'a pas lui-même à manipuler chacun de ces ustensiles.

Le nombre de configurations possibles de l'interface 2 peut être limité par un dispositif mécanique. Ainsi, en variante, l'interface homme-machine comporte un rail et l'ustensile, tel que l'ustensile 10, 50, 70, 90 ou 110, est monté à coulissement sur ce rail de sorte qu'il ne peut être déplacé que le long de ce rail pour changer la configuration de l'interface 2. Dans une autre variante, il est aussi possible de limiter le nombre d'emplacements où un ustensile peut être disposé par rapport à la face avant 24. Pour cela, l'interface 2 comporte plusieurs emplacements, équipé chacun de détrompeur propre à empêcher la fixation à cet emplacement d'un certain nombre d'ustensiles et, au contraire, à autoriser la fixation à cet emplacement d'autres ustensiles différents.

L'approximation utilisée pour construire le filtre de Kalman peut aussi être une approximation quaternaire ou supérieure, c'est-à-dire que les équations de l'électromagnétisme sont approximées à un ordre supérieur à celui correspondant à l'approximation dipolaire.

De nombreuses méthodes différentes sont utilisables pour déterminer la position et l'orientation de l'objet magnétique. Par exemple, la méthode décrite dans US6269324 est utilisable. Ces méthodes n'utilisent pas nécessairement un filtre de Kalman. Par exemple, les méthodes décrites dans US2002/171427A1 ou US6263230B1 sont possibles.

Les magnétomètres du réseau de magnétomètres ne sont pas nécessairement rangés en colonnes et en lignes. Ils peuvent être agencés aussi selon d'autres motifs. Par exemple, les magnétomètres sont disposés sur chaque sommet de chaque maille triangulaire ou hexagonale d'un maillage d'un plan.

La disposition des magnétomètres les uns par rapport aux autres peut aussi être aléatoire ou non régulière. Ainsi, la distance entre deux magnétomètres immédiatement consécutifs dans le réseau n'est pas nécessairement la même pour toutes les paires de deux magnétomètres immédiatement consécutifs. Par exemple, la densité de magnétomètres dans une zone donnée du réseau peut être plus importante qu'ailleurs. Augmenter la densité dans une zone donnée peut permettre d'augmenter la précision de la mesure dans cette zone.

Le réseau de magnétomètres peut aussi s'étendre dans trois directions non colinéaires de l'espace. Dans ces conditions, les magnétomètres sont répartis à l'intérieur d'un volume à trois dimensions.

Le nombre N de magnétomètres peut également être supérieur ou égal à soixante-quatre ou quatre-vingt dix.

Tous les magnétomètres du réseau de magnétomètres ne sont pas nécessairement identiques les uns aux autres. En variante, les magnétomètres n'ont pas tous la même sensibilité. Dans ce cas, les magnétomètres moins précis sont par exemple disposés à proximité du centre du réseau tandis que les magnétomètres les plus précis sont disposés sur la périphérie de ce réseau. Un tel mode de réalisation présente l'avantage de placer les magnétomètres les plus difficilement saturables et donc les moins sensibles, aux emplacements susceptibles d'être le plus proche de l'objet magnétique. Cela permet aussi d'étendre la zone d'interaction.

L'appareil 4 peut être remplacé par tout type d'appareil électrique qui doit être commandé en réponse à une action d'un être humain. Par exemple, l'appareil commandé peut être un robot, une machine-outil ou autre.

Dans tous les modes de réalisation décrits ici, l'aimant permanent peut être remplacé par un objet magnétique non alimenté en permanence et qui acquiert un moment magnétique en présent d'un champ magnétique continu extérieur, tel que le champ magnétique terrestre. Par exemple, l'aimant permanent est remplacé par une pièce en matériau magnétique doux. Un matériau magnétique est considéré comme doux si son champ magnétique coercitif est inférieur à 10 ou 1 A.m⁻¹. Une telle pièce présente un moment magnétique créé par l'interaction entre le champ magnétique terrestre et la pièce en matériau magnétique doux.

## Revendications

1. Interface homme-machine configurable pour commander un appareil électrique, cette interface comportant :
- au moins un ustensile mobile (10, 50, 70, 90, 110), chaque ustensile étant actionnable, directement par la main d'un utilisateur, pour passer entre au moins un premier état de commande de l'appareil électrique et un second état,
- au moins un aimant permanent (16, 66, 78, 80, 98, 100, 126, 128) solidaire de l'ustensile dont la position ou l'orientation varie quand l'ustensile est actionné par l'utilisateur pour passer entre ses premier et second états,et
- un réseau de magnétomètres comportant N magnétomètres tri-axes (Mᵢⱼ), reliés mécaniquement les uns aux autres sans aucun degré de liberté pour conserver une distance connue entre chacun de ces magnétomètres,
- une unité (30) de traitement apte :
• à déterminer, pour cet aimant permanent dont la position ou l'orientation varie quand ustensile est actionné, la valeur d'au moins une première variable variant en fonction de l'état de cet ustensile, à partir des mesures des magnétomètres du réseau,
• à établir l'état de l'ustensile, utilisé pour générer une commande de l'appareil électrique, à partir de cette valeur déterminée de ladite au moins une première variable,
• à générer et à transmettre à l'appareil électrique une commande fonction de l'état dans lequel se trouve l'ustensile et d'une loi de commande qui a été sélectionnée pour cet ustensile, chaque loi de commande associant au premier état de l'ustensile établi en utilisant la valeur déterminée pour ladite au moins une première variable, une première commande de l'appareil électrique et au second état de ce même ustensile établi en utilisant la valeur déterminée pour ladite au moins une première variable, une seconde commande différente ou aucune commande de l'appareil électrique, et
• à déterminer, pour ce même aimant permanent ou un autre aimant permanent de l'ustensile, la valeur d'au moins une seconde variable, différente de ladite au moins une première variable, codant sa position ou son orientation dans un repère tridimensionnel fixé sans aucun degré de liberté au réseau ou l'amplitude de son moment magnétique, à partir des mesures des magnétomètres du réseau,
**caractérisé en ce que** :
- N est un nombre entier supérieur ou égal à cinq, et
- l'unité (30) de traitement est apte :
• à sélectionner automatiquement la loi de commande à associer à l'ustensile actionné par l'utilisateur, parmi plusieurs lois de commande différentes de l'appareil électrique, les lois de commande différant les unes des autres par le fait qu'au même premier état de l'ustensile établi en utilisant la valeur déterminée pour ladite au moins une première variable ou au même second état de l'ustensile établi en utilisant la valeur déterminée pour ladite au moins une première variable, elles associent des commandes différentes de l'appareil électrique, et
• à réaliser automatiquement la sélection de la loi de commande à partir de la valeur déterminée pour ladite au moins une seconde variable.

2. Interface selon la revendication 1, dans lequel l'ustensile (10, 50) comporte :
- un axe (18, 60) présentant, une première et une seconde inclinaisons par rapport à un des axes du repère tridimensionnel, respectivement, dans les premier et second états de l'ustensile, et
- l'aimant permanent (16, 66) est fixé sans aucun degré de liberté par rapport à l'axe, dans une position où la direction de son moment magnétique est parallèle à cet axe.

3. Interface selon la revendication 1, dans laquelle l'ustensile (70) comporte un volant déplaçable en rotation autour d'un axe et l'aimant permanent (78, 80) est fixé sans aucun degré de liberté à ce volant dans une position excentrée par rapport à l'axe de rotation ou dans une position où la direction de son moment magnétique est inclinée par rapport à l'axe de rotation.

4. Interface selon l'une quelconque des revendications 1 à 3, dans laquelle l'unité (30) de traitement est apte à déterminer le nombre d'aimant permanent et, pour chaque aimant permanent, à déterminer six variables codant sa position et son orientation dans le repère tridimensionnel et l'amplitude de son moment magnétique, à partir des mesures des magnétomètres du réseau.

5. Procédé de commande d'un appareil électrique à l'aide d'une interface homme-machine configurable, dans lequel le procédé comprend :
- l'actionnement (172) d'au moins un ustensile mobile, directement par la main d'un utilisateur, pour passer entre au moins un premier état de commande de l'appareil électrique et un second état, l'ustensile comportant au moins un aimant permanent solidaire de l'ustensile dont la position ou l'orientation varie quand l'ustensile est actionné par l'utilisateur pour passer entre ses premier et second états,
- la mesure (146) du champ magnétique généré par ledit au moins un aimant permanent solidaire de l'ustensile à l'aide d'un réseau de magnétomètres comportant N magnétomètres tri-axes, reliés mécaniquement les uns aux autres sans aucun degré de liberté pour conserver une distance connue entre chacun de ces magnétomètres,
- la détermination (148), pour cet aimant permanent dont la position ou l'orientation varie quand l'ustensile est actionné, de la valeur d'au moins une première variable variant en fonction de l'état de cet ustensile, à partir des mesures des magnétomètres du réseau,
- l'établissement (164) de l'état de l'ustensile utilisé pour générer une commande de l'appareil électrique, à partir de cette valeur déterminée de ladite au moins une première variable,
- la génération (166) et la transmission (168) à l'appareil électrique d'une commande fonction de l'état dans lequel se trouve l'ustensile et d'une loi de commande qui a été sélectionnée pour cet ustensile, chaque loi de commande associant au premier état de l'ustensile établi en utilisant la valeur déterminée pour ladite au moins une première variable, une première commande de l'appareil électrique et au second état de ce même ustensile établi en utilisant la valeur déterminée pour ladite au moins une première variable, une seconde commande différente ou aucune commande de l'appareil électrique,
- la détermination (148), pour ce même aimant permanent ou un autre aimant permanent de l'ustensile, de la valeur d'au moins une seconde variable, différente de ladite au moins une première variable, codant sa position ou son orientation dans un repère tridimensionnel fixé sans aucun degré de liberté au réseau ou l'amplitude de son moment magnétique, à partir des mesures des magnétomètres du réseau, **caractérisé en ce que** :
a) N est un nombre entier supérieur ou égal à cinq, et le procédé comporte également :
b) la sélection (160) automatique de la loi de commande à associer à l'ustensile actionné par l'utilisateur, parmi plusieurs lois de commande différentes de l'appareil électrique, les lois de commande différant les unes des autres par le fait qu'au même premier état de l'ustensile établi en utilisant la valeur déterminée pour ladite au moins une première variable ou au même second état de l'ustensile établi en utilisant la valeur déterminée pour ladite au moins une première variable, elles associent des commandes différentes de l'appareil électrique, et
c) la réalisation automatiquement de la sélection (160) de la loi de commande à partir de la valeur déterminée pour ladite au moins une seconde variable.

6. Procédé selon la revendication 5, dans lequel le procédé comprend :
- pour chaque aimant permanent de l'ustensile, la détermination (148) de six variables codant sa position et son orientation dans le repère tridimensionnel et l'amplitude de son moment magnétique, à partir des mesures des magnétomètres du réseau, puis
- l'utilisation d'une première partie des six variables dont les valeurs ont été déterminées pour un même aimant permanent en tant que première variable pour établir (164) l'état de l'ustensile équipé de cet aimant permanent et l'utilisation d'une seconde partie de ces six variables, différente de la première partie, en tant que seconde variable pour sélectionner (160) la loi de commande à associer à cet ustensile.

7. Procédé selon la revendication 6, dans lequel l'établissement de l'état de l'ustensile est réalisé uniquement à partir des valeurs des premières variables codant l'inclinaison de l'ustensile par rapport à au moins un axe du repère tridimensionnel.

8. Procédé selon l'une quelconque des revendications 5 à 7, dans lequel l'étape de détermination de la valeur d'au moins une seconde variable comprend la détermination (148), pour un aimant permanent de l'ustensile, de la valeur d'au moins une seconde variable codant sa position dans le repère tridimensionnel et, l'étape c), comprend la comparaison de la valeur déterminée de cette seconde variable codant la position, à une zone prédéfinie dont les limites sont définies par rapport au réseau de magnétomètres pour sélectionner la loi de commande à associer à l'ustensile équipé de cet aimant permanent en fonction de l'emplacement de l'ustensile par rapport au réseau de magnétomètres.

9. Procédé selon l'une quelconque des revendications 5 à 7, dans lequel l'étape de détermination de la valeur d'au moins une seconde variable comprend la détermination (148), pour un aimant permanent de l'ustensile, de la valeur d'au moins une variable codant sa position ou son orientation dans le repère tridimensionnel, et l'étape c) comprend la détermination de la position ou l'orientation relative de cet aimant permanent équipant cet ustensile par rapport à la position ou l'orientation d'un autre aimant permanent mécaniquement indépendant de cet ustensile à partir des valeurs des variables déterminées lors de l'étape de détermination de la valeur d'au moins une seconde variable et la sélection (160) de la loi de commande à associer à cet ustensile à partir de cette position ou orientation relative déterminée.

10. Procédé selon l'une quelconque des revendications 5 à 7, dans lequel l'étape de détermination de la valeur d'au moins une seconde variable comprend la détermination (148), pour un aimant permanent de l'ustensile, de la valeur d'une seconde variable codant l'amplitude de son moment magnétique et, l'étape c) comprend la sélection de la loi de commande à associer à cet ustensile uniquement à partir de l'amplitude déterminée du moment magnétique de l'aimant permanent équipant cet ustensile.

11. Procédé selon l'une quelconque des revendications 5 à 7, dans lequel l'étape de détermination de la valeur d'au moins une seconde variable comprend la détermination (148), pour un aimant permanent de l'ustensile, de la valeur d'au moins une seconde variable codant sa position ou son orientation dans le repère tridimensionnel, et l'étape c) comprend la détermination de la position relative d'au moins deux aimants permanents équipant cet ustensile propre à distinguer cet ustensile des autres ustensiles susceptibles d'être utilisés, à partir des valeurs des secondes variables déterminées lors de l'étape de détermination de la valeur d'au moins une seconde variable et l'étape c) comprend la sélection de la loi de commande en utilisant la position relative ainsi déterminée.

12. Procédé selon l'une quelconque des revendications 5 à 11, dans lequel le procédé comporte la détermination (148) du nombre d'aimant permanent et pour chaque aimant permanent, la détermination (148) de six variables codant sa position et son orientation dans le repère tridimensionnel et l'amplitude de son moment magnétique, à partir des mesures des magnétomètres du réseau.

13. Support (34) d'enregistrement d'informations, caractérisant à ce qu'il comporte des instructions pour l'exécution d'un procédé conforme une quelconque des revendications 5 à 12, lorsque ces instructions sont exécutées par un calculateur électronique.

## Patentansprüche

1. Konfigurierbare Mensch-Maschine-Schnittstelle zur Steuerung eines elektrischen Gerätes, wobei diese Schnittstelle aufweist:
- wenigstens ein bewegliches Werkzeug (10, 50, 70, 90, 110), wobei jedes Werkzeug direkt mit der Hand eines Benutzers betätigbar ist, um zwischen wenigstens einem ersten Steuerungszustand des elektrischen Gerätes und einem zweiten Zustand zu wechseln,
- wenigstens einen mit dem Werkzeug fest verbundenen Permanentmagneten (16, 66, 78, 80, 98, 100, 126, 128), dessen Position oder Ausrichtung sich ändert, wenn das Werkzeug von dem Benutzer betätigt wird, um zwischen seinem ersten und zweiten Zustand zu wechseln, und
- ein Netz von Magnetometern, das N dreiachsige Magnetometer (mᵢⱼ) aufweist, die ohne Freiheitsgrad mechanisch miteinander verbunden sind, um einen bekannten Abstand zwischen allen diesen Magnetometern beizubehalten,
- eine Verarbeitungseinheit (30), die in der Lage ist:
» für diesen Permanentmagneten, dessen Position oder Ausrichtung sich ändert, wenn das Werkzeug betätigt wird, den Wert wenigstens einer ersten Variablen, die sich in Abhängigkeit vom Zustand dieses Werkzeugs ändert, aus den Messungen der Magnetometer des Netzes zu bestimmen,
» den Zustand des Werkzeugs, der verwendet wird, um eine Steuerung des elektrischen Gerätes zu erzeugen, aus diesem bestimmten Wert der wenigstens einen ersten Variablen zu ermitteln,
» eine Steuerung zu erzeugen und an das elektrische Gerät zu übertragen, die von dem Zustand, in dem sich das Werkzeug befindet, und von einem Steuergesetz, welches für dieses Werkzeug ausgewählt worden ist, abhängig ist, wobei jedes Steuergesetz dem ersten Zustand des Werkzeugs, der unter Verwendung des für die wenigstens eine erste Variable bestimmten Wertes ermittelt wurde, eine erste Steuerung des elektrischen Gerätes und dem zweiten Zustand desselben Werkzeugs, der unter Verwendung des für die wenigstens eine erste Variable bestimmten Wertes ermittelt wurde, eine zweite, andere Steuerung oder keine Steuerung des elektrischen Gerätes zuordnet, und
» für denselben Permanentmagneten oder einen anderen Permanentmagneten des Werkzeugs den Wert wenigstens einer von der wenigstens einen ersten Variablen verschiedenen zweiten Variablen, die seine Position oder seine Ausrichtung in einem dreidimensionalen Koordinatensystem, das ohne Freiheitsgrad an dem Netz fixiert ist, oder die Amplitude seines magnetischen Moments codiert, aus den Messungen der Magnetometer des Netzes zu bestimmen,
**dadurch gekennzeichnet, dass**:
- N eine ganze Zahl größer oder gleich fünf ist,
- die Verarbeitungseinheit (30) in der Lage ist:
• das Steuergesetz, das dem vom Benutzer betätigten Werkzeug zuzuordnen ist, automatisch aus mehreren verschiedenen Steuergesetzen des elektrischen Gerätes auszuwählen, wobei sich die Steuergesetze dadurch voneinander unterscheiden, dass sie demselben ersten Zustand des Werkzeugs, der unter Verwendung des für die wenigstens eine erste Variable bestimmten Wertes ermittelt wurde, oder demselben zweiten Zustand des Werkzeugs, der unter Verwendung des für die wenigstens eine erste Variable bestimmten Wertes ermittelt wurde, unterschiedliche Steuerungen des elektrischen Gerätes zuordnen, und
• die Auswahl des Steuergesetzes automatisch anhand des für die wenigstens eine zweite Variable bestimmten Wertes vorzunehmen.

2. Schnittstelle nach Anspruch 1, wobei das Werkzeug (10, 50) aufweist:
- eine Achse (18, 60), die im ersten und zweiten Zustand des Werkzeugs eine erste bzw. eine zweite Neigung bezüglich einer der Achsen des dreidimensionalen Koordinatensystems aufweist, und
- wobei der Permanentmagnet (16, 66) ohne einen Freiheitsgrad bezüglich der Achse in einer Position befestigt ist, in der die Richtung seines magnetischen Moments parallel zu dieser Achse ist.

3. Schnittstelle nach Anspruch 1, wobei das Werkzeug (70) ein Lenkrad aufweist, das um eine Achse rotatorisch bewegbar ist, und der Permanentmagnet (78, 80) ohne einen Freiheitsgrad an diesem Lenkrad in einer bezüglich der Drehachse exzentrischen Position befestigt ist, in der die Richtung seines magnetischen Moments bezüglich der Drehachse geneigt ist.

4. Schnittstelle nach einem der Ansprüche 1 bis 3, wobei die Verarbeitungseinheit (30) in der Lage ist, die Anzahl der Permanentmagnete zu bestimmen und für jeden Permanentmagneten sechs Variable, die seine Position und seine Ausrichtung in dem dreidimensionalen Koordinatensystem und die Amplitude seines magnetischen Moments codieren, aus den Messungen der Magnetometer des Netzes zu bestimmen.

5. Verfahren zur Steuerung eines elektrischen Gerätes mithilfe einer konfigurierbaren Mensch-Maschine-Schnittstelle, wobei das Verfahren umfasst:
- die Betätigung (172) wenigstens eines beweglichen Werkzeugs direkt mit der Hand eines Benutzers, um zwischen wenigstens einem ersten Steuerungszustand des elektrischen Gerätes und einem zweiten Zustand zu wechseln, wobei das Werkzeug wenigstens einen mit dem Werkzeug fest verbundenen Permanentmagneten aufweist, dessen Position oder Ausrichtung sich ändert, wenn das Werkzeug von dem Benutzer betätigt wird, um zwischen seinem ersten und zweiten Zustand zu wechseln,
- die Messung (146) des Magnetfeldes, das von dem wenigstens einen mit dem Werkzeug fest verbundenen Permanentmagneten erzeugt wird, mithilfe eines Netzes von Magnetometern, das N dreiachsige Magnetometer aufweist, die ohne Freiheitsgrad mechanisch miteinander verbunden sind, um einen bekannten Abstand zwischen allen diesen Magnetometern beizubehalten,
- die Bestimmung (148), für diesen Permanentmagneten, dessen Position oder Ausrichtung sich ändert, wenn das Werkzeug betätigt wird, des Wertes wenigstens einer ersten Variablen, die sich in Abhängigkeit vom Zustand dieses Werkzeugs ändert, aus den Messungen der Magnetometer des Netzes,
- die Ermittlung (164) des Zustands des Werkzeugs, der verwendet wird, um eine Steuerung des elektrischen Gerätes zu erzeugen, aus diesem bestimmten Wert der wenigstens einen ersten Variablen,
- die Erzeugung (166), und die Übertragung (168) an das elektrische Gerät, einer Steuerung, die von dem Zustand, in dem sich das Werkzeug befindet, und von einem Steuergesetz, welches für dieses Werkzeug ausgewählt worden ist, abhängig ist, wobei jedes Steuergesetz dem ersten Zustand des Werkzeugs, der unter Verwendung des für die wenigstens eine erste Variable bestimmten Wertes ermittelt wurde, eine erste Steuerung des elektrischen Gerätes und dem zweiten Zustand desselben Werkzeugs, der unter Verwendung des für die wenigstens eine erste Variable bestimmten Wertes ermittelt wurde, eine zweite, andere Steuerung oder keine Steuerung des elektrischen Gerätes zuordnet,
- die Bestimmung (148), für denselben Permanentmagneten oder einen anderen Permanentmagneten des Werkzeugs, des Wertes wenigstens einer von der wenigstens einen ersten Variablen verschiedenen zweiten Variablen, die seine Position oder seine Ausrichtung in einem dreidimensionalen Koordinatensystem, das ohne Freiheitsgrad an dem Netz fixiert ist, oder die Amplitude seines magnetischen Moments codiert, aus den Messungen der Magnetometer des Netzes, **dadurch gekennzeichnet, dass**:
a) N eine ganze Zahl größer oder gleich fünf ist, und das Verfahren außerdem umfasst:
b) die automatische Auswahl (160) des Steuergesetzes, das dem vom Benutzer betätigten Werkzeug zuzuordnen ist, aus mehreren verschiedenen Steuergesetzen des elektrischen Gerätes, wobei sich die Steuergesetze dadurch voneinander unterscheiden, dass sie demselben ersten Zustand des Werkzeugs, der unter Verwendung des für die wenigstens eine erste Variable bestimmten Wertes ermittelt wurde, oder demselben zweiten Zustand des Werkzeugs, der unter Verwendung des für die wenigstens eine erste Variable bestimmten Wertes ermittelt wurde, unterschiedliche Steuerungen des elektrischen Gerätes zuordnen, und
c) die automatische Durchführung der Auswahl (160) des Steuergesetzes anhand des für die wenigstens eine zweite Variable bestimmten Wertes.

6. Verfahren nach Anspruch 5, wobei das Verfahren umfasst:
- für jeden Permanentmagneten des Werkzeugs, die Bestimmung (148) von sechs Variablen, die seine Position und seine Ausrichtung in dem dreidimensionalen Koordinatensystem und die Amplitude seines magnetischen Moments codieren, aus den Messungen der Magnetometer des Netzes, danach
- die Verwendung eines ersten Teils der sechs Variablen, deren Werte für denselben Permanentmagneten bestimmt worden sind, als erste Variable zum Ermitteln (164) des Zustands des mit diesem Permanentmagneten ausgestatteten Werkzeugs und die Verwendung eines zweiten Teils dieser sechs Variablen, der vom ersten Teil verschieden ist, als zweite Variable zum Auswählen (160) des Steuergesetzes, das diesem Werkzeug zuzuordnen ist.

7. Verfahren nach Anspruch 6, wobei die Ermittlung des Zustands des Werkzeugs ausschließlich anhand der Werte der ersten Variablen vorgenommen wird, welche die Neigung des Werkzeugs bezüglich wenigstens einer Achse des dreidimensionalen Koordinatensystems codiert.

8. Verfahren nach einem der Ansprüche 5 bis 7, wobei der Schritt der Bestimmung des Wertes wenigstens einer zweiten Variablen die Bestimmung (148), für einen Permanentmagneten des Werkzeugs, des Wertes wenigstens einer zweiten Variablen, die seine Position in dem dreidimensionalen Koordinatensystem codiert, umfasst und der Schritt c) den Vergleich des bestimmten Wertes dieser zweiten Variablen, welche die Position codiert, mit einem vordefinierten Bereich umfasst, dessen Grenzen in Bezug auf das Netz von Magnetometern definiert sind, um das Steuergesetz, das dem mit diesem Permanentmagneten ausgestatteten Werkzeug zuzuordnen ist, in Abhängigkeit vom Ort des Werkzeugs in Bezug auf das Netz von Magnetometern auszuwählen.

9. Verfahren nach einem der Ansprüche 5 bis 7, wobei der Schritt der Bestimmung des Wertes wenigstens einer zweiten Variablen die Bestimmung (148), für einen Permanentmagneten des Werkzeugs, des Wertes wenigstens einer Variablen, die seine Position oder seine Ausrichtung in dem dreidimensionalen Koordinatensystem codiert, umfasst und der Schritt c) die Bestimmung der relativen Position oder Ausrichtung dieses Permanentmagneten, mit dem dieses Werkzeug ausgestattet ist, bezüglich der Position oder Ausrichtung eines anderen Permanentmagneten, der von diesem Werkzeug mechanisch unabhängig ist, anhand der Werte der Variablen, die im Schritt der Bestimmung des Wertes wenigstens einer zweiten Variablen bestimmt wurden, und die Auswahl (160) des diesem Werkzeug zuzuordnenden Steuergesetzes anhand dieser bestimmten relativen Position oder Ausrichtung umfasst.

10. Verfahren nach einem der Ansprüche 5 bis 7, wobei der Schritt der Bestimmung des Wertes wenigstens einer zweiten Variablen die Bestimmung (148), für einen Permanentmagneten des Werkzeugs, des Wertes einer zweiten Variablen, welche die Amplitude seines magnetischen Moments codiert, umfasst und der Schritt c) die Auswahl des Steuergesetzes, das diesem Werkzeug zuzuordnen ist, ausschließlich anhand der bestimmten Amplitude des magnetischen Moments des Permanentmagneten, mit dem dieses Werkzeug ausgestattet ist, umfasst.

11. Verfahren nach einem der Ansprüche 5 bis 7, wobei der Schritt der Bestimmung des Wertes wenigstens einer zweiten Variablen die Bestimmung (148), für einen Permanentmagneten des Werkzeugs, des Wertes wenigstens einer zweiten Variablen, die seine Position oder seine Ausrichtung in dem dreidimensionalen Koordinatensystem codiert, umfasst und der Schritt c) die Bestimmung der relativen Position von wenigstens zwei Permanentmagneten, mit denen dieses Werkzeug ausgestattet ist, die es ermöglicht, dieses Werkzeug von den anderen Werkzeugen, die verwendbar sind, zu unterscheiden, anhand der Werte der zweiten Variablen umfasst, die im Schritt der Bestimmung des Wertes wenigstens einer zweiten Variablen bestimmt wurden, und der Schritt c) die Auswahl des Steuergesetzes unter Verwendung der so bestimmten relativen Position umfasst.

12. Verfahren nach einem der Ansprüche 5 bis 11, wobei das Verfahren die Bestimmung (148) der Anzahl der Permanentmagnete und für jeden Permanentmagneten die Bestimmung (148) von sechs Variablen, die seine Position und seine Ausrichtung in dem dreidimensionalen Koordinatensystem und die Amplitude seines magnetischen Moments codieren, aus den Messungen der Magnetometer des Netzes umfasst.

13. Informationsaufzeichnungsmedium (34), **dadurch gekennzeichnet, dass** es Anweisungen zur Ausführung eines Verfahrens gemäß einem der Ansprüche 5 bis 12, wenn diese Anweisungen von einem elektronischen Rechner ausgeführt werden, umfasst.

## Claims

1. Configurable human-machine interface for commanding an electrical device, this interface having:
- at least one mobile utensil (10, 50, 70, 90, 110), each utensil being able to be actuated, directly by the hand of a user, so as to change between at least a first command state of the electrical device and a second state,
- at least one permanent magnet (16, 66, 78, 80, 98, 100, 126, 128) joined to the utensil, the position or orientation of which varies when the utensil is actuated by the user so as to change between its first and second states, and
- a network of magnetometers having N three-axis magnetometers (Mᵢⱼ) that are connected mechanically to one another without any degree of freedom so as to keep a known distance between each of these magnetometers,
- a processing unit (30) able:
• to determine, for this permanent magnet the position or orientation of which varies when the utensil is actuated, the value of at least one first variable that varies depending on the state of this utensil, based on the measurements from the magnetometers of the network,
• to establish the state of the utensil, used to generate a command for the electrical device, from this determined value of said at least one first variable,
• to generate and to transmit a command to the electrical device depending on the state in which the utensil is situated and on a command law that has been selected for this utensil, each command law associating, with the first state of the utensil established using the value determined for said at least one first variable, a first command for the electrical device and, with the second state of this same utensil established using the value determined for said at least one first variable, a second, different command or no command for the electrical device, and
• to determine, for this same permanent magnet or another permanent magnet of the utensil, the value of at least one second variable, different from said at least one first variable, coding its position or its orientation in a fixed three-dimensional reference frame without any degree of freedom with respect to the network or the amplitude of its magnetic moment, based on the measurements from the magnetometers of the network,
**characterized in that**:
- N is an integer greater than or equal to five, and
- the processing unit (30) is able:
• to automatically select the command law to be associated with the utensil actuated by the user, from a plurality of different command laws for the electrical device, the command laws differing from one another by virtue of the fact that, in the same first state of the utensil established using the value determined for said at least one first variable or in the same second state of the utensil established using the value determined for said at least one first variable, they associate different commands for the electrical device, and
• to automatically select the command law based on the value determined for said at least one second variable.

2. Interface according to Claim 1, wherein the utensil (10, 50) has:
- an axis (18, 60) having a first and a second incline with respect to one of the axes of the three-dimensional reference frame, respectively, in the first and second states of the utensil, and
- the permanent magnet (16, 66) is fixed without any degree of freedom with respect to the axis, in a position in which the direction of its magnetic moment is parallel to this axis.

3. Interface according to Claim 1, wherein the utensil (70) has a flywheel able to be moved in rotation about an axis and the permanent magnet (78, 80) is fixed without any degree of freedom with respect to this flywheel in an eccentric position with respect to the axis of rotation or in a position in which the direction of its magnetic moment is inclined with respect to the axis of rotation.

4. Interface according to any one of Claims 1 to 3, wherein the processing unit (30) is able to determine the number of permanent magnets and, for each permanent magnet, to determine six variables coding its position and its orientation in the three-dimensional reference frame and the amplitude of its magnetic moment, based on the measurements from the magnetometers of the network.

5. Method for commanding an electrical device using a configurable human-machine interface, wherein the method comprises:
- actuating (172) at least one mobile utensil, directly by the hand of a user, so as to change between at least a first command state of the electrical device and a second state, the utensil having at least one permanent magnet joined to the utensil, the position or orientation of which varies when the utensil is actuated by the user so as to change between its first and second states,
- measuring (146) the magnetic field generated by said at least one permanent magnet joined to the utensil using a network of magnetometers having N three-axis magnetometers that are connected mechanically to one another without any degree of freedom so as to keep a known distance between each of these magnetometers,
- determining (148), for this permanent magnet the position or orientation of which varies when the utensil is actuated, the value of at least one first variable that varies depending on the state of this utensil, based on the measurements from the magnetometers of the network,
- establishing (164) the state of the utensil, used to generate a command for the electrical device, based on this determined value of said at least one first variable,
- generating (166) and transmitting (168) a command to the electrical device depending on the state in which the utensil is situated and on a command law that has been selected for this utensil, each command law associating, with the first state of the utensil established using the value determined for said at least one first variable, a first command for the electrical device and, with the second state of this same utensil established using the value determined for said at least one first variable, a second, different command or no command for the electrical device,
- determining (148), for this same permanent magnet or another permanent magnet of the utensil, the value of at least one second variable, different from said at least one first variable, coding its position or its orientation in a fixed three-dimensional reference frame without any degree of freedom with respect to the network or the amplitude of its magnetic moment, based on the measurements from the magnetometers of the network,
**characterized in that**:
a) N is an integer greater than or equal to five, and the method also comprises:
b) automatically selecting (160) the command law to be associated with the utensil actuated by the user, from a plurality of different command laws for the electrical device, the command laws differing from one another by virtue of the fact that, in the same first state of the utensil established using the value determined for said at least one first variable or in the same second state of the utensil established using the value determined for said at least one first variable, they associate different commands for the electrical device, and
c) automatically selecting (160) the command law based on the value determined for said at least one second variable.

6. Method according to Claim 5, wherein the method comprises:
- for each permanent magnet of the utensil, determining (148) six variables coding its position and its orientation in the three-dimensional reference frame and the amplitude of its magnetic moment, based on the measurements from the magnetometers of the network, and then
- using a first portion of the six variables the values of which have been determined for one and the same permanent magnet as a first variable for establishing (164) the state of the utensil equipped with this permanent magnet, and using a second portion of these six variables, different from the first portion, as a second variable for selecting (160) the command law to be associated with this utensil.

7. Method according to Claim 6, wherein the state of the utensil is established based solely on the values of the first variables coding the incline of the utensil with respect to at least one axis of the three-dimensional reference frame.

8. Method according to any one of Claims 5 to 7, wherein the step of determining the value of at least one second variable comprises determining (148), for a permanent magnet of the utensil, the value of at least one second variable coding its position in the three-dimensional reference frame, and step c) comprises comparing the determined value of this second variable coding the position with a predefined area the limits of which are defined with respect to the network of magnetometers in order to select the command law to be associated with the utensil equipped with this permanent magnet depending on the location of the utensil with respect to the network of magnetometers.

9. Method according to any one of Claims 5 to 7, wherein the step of determining the value of at least one second variable comprises determining (148), for a permanent magnet of the utensil, the value of at least one variable coding its position or its orientation in the three-dimensional reference frame, and step c) comprises determining the relative position or orientation of this permanent magnet fitted to this utensil with respect to the position or the orientation of another permanent magnet that is mechanically independent of this utensil based on the values of the variables determined in the step of determining the value of at least one second variable, and selecting (160) the command law to be associated with this utensil based on this determined relative position or orientation.

10. Method according to any one of Claims 5 to 7, wherein the step of determining the value of at least one second variable comprises determining (148), for a permanent magnet of the utensil, the value of a second variable coding the amplitude of its magnetic moment, and step c) comprises selecting the command law to be associated with this utensil based solely on the determined amplitude of the magnetic moment of the permanent magnet fitted to this utensil.

11. Method according to any one of Claims 5 to 7, wherein the step of determining the value of at least one second variable comprises determining (148), for a permanent magnet of the utensil, the value of at least one second variable coding its position or its orientation in the three-dimensional reference frame, and step c) comprises determining the relative position of at least two permanent magnets fitted to this utensil able to distinguish this utensil from other utensils liable to be used, based on the values of the second variables determined in the step of determining the value of at least one second variable, and step c) comprises selecting the command law using the relative position thus determined.

12. Method according to any one of Claims 5 to 11, wherein the method comprises determining (148) the number of permanent magnets and, for each permanent magnet, determining (148) six variables coding its position and its orientation in the three-dimensional reference frame and the amplitude of its magnetic moment, based on the measurements from the magnetometers of the network.

13. Information recording medium (34), **characterized in that** it contains instructions for executing a method according to any one of Claims 5 to 12 when these instructions are executed by an electronic computer.
